# EUROPÄISCHE PATENTANMELDUNG

(11) **EP 4 700 188 A1**
(43) Veröffentlichungstag der Anmeldung: **25.02.2026**
(21) Anmeldenummer: 24195390.0
(22) Anmeldetag: 20.08.2024
(51) Int. Cl.: E04D 15/04, B25B 21/00, B25B 23/06, B25B 23/08

(54) **SETZGERÄT**

(71) Anmelder: SFS Group International AG, 9435 Heerbrugg (CH)
(72) Erfinder: Pöltinger, Yves, 9430 St. Margrethen (CH)

(57) **Zusammenfassung**

Ein Setzgerät (100) zur Montage von Dachmembranen (470) und Isolationsschichten (450) auf einer Unterkonstruktion (460) verwendet zur Befestigung eine Anordnung aus einem Befestiger (210) und einer ferromagnetischen Lastverteilscheibe (200). Das Setzgerät umfasst einen verfahrbaren Rahmen (130) mit einer ersten Zuführvorrichtung (110) für Lastverteilscheiben und einer zweiten Zuführvorrichtung (120) für Befestiger. Der Setzvorgang startet mit der manuellen Betätigung einer vertikal angeordneten, gegen eine Feder teleskopierbaren Druckstange (145). Eine daran angebrachte Antriebseinheit (150) mit einem motorisch angetriebenen Antriebsdorn (155) treibt einen Befestiger aus einer Montageführung 320 durch eine Lastverteilscheibe (200), die in einer Montageführung in der Bodengruppe 310 des Setzgeräts gehalten wird. Hierzu findet ein Magnetsystem Verwendung, das so ausgelegt ist, dass die zu setzende Lastverteilscheibe (200) hängend in der Montagehalterung (300) ohne zusätzliche mechanische Haltemittel fixiert werden kann.

## Beschreibung

Die vorliegende Erfindung befasst sich mit einem Setzgerät zum Verschrauben von Flachdachsystemen wie beispielsweise Dachmembranen (-bahnen), Metallblechen, Gipskartonplatten sowie Isolationsschichten auf Flachdächern.

### HINTERGRUND

Bei der Herstellung von Flachdächern, speziell auf Industriegebäuden, ist es bekannt, auf eine statisch tragende Dachfläche aus Holz, Stahlblech oder Beton ein- oder mehrere Lagen aus Dämmstoffen zur Isolation aufzubringen. Um diese danach gegen Witterungseinflüsse zu schützen, ist die Verwendung von Dachfolien (Dachbahnen bzw. Dachmembranen) aus Kunststoff üblich. Diese werden flächig ausgerollt und an den Überlapp-Bereichen (Säumen) miteinander verklebt oder verschweisst. Sowohl die Isolationsschichten wie auch die Folie müssen an der Unterkonstruktion gesichert werden. Eines der bekannten Verfahren bei Unterkonstruktionen aus Holz oder Metallblech besteht darin, die Dachmembranen bzw. Isolierschichten mit entsprechend langen selbstbohrenden Schrauben zu befestigen. Die Schrauben werden dabei mit runden oder quadratischen Lastverteilscheiben, ähnlich überdimensionierten Unterlagscheiben, versehen, durch die die Zugspannung der Schraube auf die Dachmembranen bzw. Isolierschichten flächig verteilt wird. Die Dichtfolien werden dann häufig mit den Verteilscheiben klebe-verschweisst.

Das Setzen solcher Befestiger ist ein aufwändiger Prozess, da bei grossen Dachflächen u.U. mehrere Tausend solcher Befestigungspunkte kontrolliert eingebracht werden müssen.

Abgesehen von dieser Hauptanwendung wird diese Befestigungsart mit Schraube und Lastverteilscheibe auch für andere Materialen verwendet, bei denen die Zugspannung der Schraube flächig verteilt werden muss.

### STAND DER TECHNIK

Im Stand der Technik sind seit langem Setzgeräte bekannt, die das Setzen einer Kombination von Lastverteilscheibe und Selbstbohrschraube erleichtern, insbesondere dem Bediener ein Arbeiten im Stehen erlauben.

Ein grundsätzliches Problem dieser Art von Setzgerät besteht darin, dass das Zusammenführen von Lastverteilscheibe und Befestiger (Schraube) erst unmittelbar vor dem Setzvorgang erfolgen soll. Dazu wird üblicherweise aus einem Vorrat an Lastverteilscheiben mittels eines Verschiebe-Schlittens eine Scheibe entnommen und in eine Montageposition gebracht.

Die Zuführung der Schraube erfolgt separat manuell durch ein Fallrohr in eine Zentrier- bzw. Führungshülse, die als Montageführung dient. Alternativ kann auch ein Magazinstreifen vorgesehen sein, aus dem pro Setzvorgang eine Schraube - synchronisiert mit der Abwärtsbewegung der Druckstange - vereinzelt wird.

Die Führungshülse der Montageführung ist grundsätzlich so ausgerichtet und ausgerüstet, dass sie die Bohrspitze der Schraube von oben vor der Öffnung der Lastverteilscheibe platziert und hält. Das von oben in den Kraftangriff der Schraube eingreifende Bit der Antriebseinheit führt und treibt dann die Schraube an. Die Antriebseinheit führt durch das Herunterdrücken der Haltegriffe die Schraube vertikal durch die Lastverteilscheibe hindurch in die Isolierschichten ein und bohrt sie dann in die tragende Unterkonstruktion. Die Lastverteilscheibe wird idealerweise erst dann aus ihrer Montageposition gelöst und auf die Isolierschicht gedrückt, wenn der sich absenkende Schraubenkopf dies erforderlich macht.

Eine solche Vorrichtung zeigt die EP 0 621 108 A1. Das Festhalten der Lastverteilscheibe in Montageposition erfolgt hier durch eine Sperrklinke, deren Verriegelung mechanisch freigegeben wird.

In der EP 0 003 004 A1 sind Drehzapfen oder Klappen vorgesehen, die eine durch Federkraft gesicherte Halteposition für die Unterlagscheiben bieten, die durch Steuerstangen rechtzeitig während des Setzvorgangs in eine Freigabeposition gebracht werden können.

Die Halterung der Lastverteilscheibe in der Montageposition während des Setzvorgangs muss somit zwei an sich widersprechende Aufgaben erfüllen: Sie soll einerseits eine unverrückbare und exakte Position gewährleisten, andererseits rechtzeitig die Unterlagscheibe freigeben, ohne davor oder danach den Setzvorgang zu behindern. Eine entsprechende Lösung sollte mechanisch nicht zu komplex sein, zuverlässig sowohl beim Halten wie auch bei der Freigabe sein und für den Einsatz unter Baustellenbedingungen geeignet.

Die vorliegende Erfindung hat die Aufgabe, diese mechanischen Haltevorrichtungen durch ein vereinfachtes Haltesystem abzulösen.

### BESCHREIBUNG DER ERFINDUNG

Diese Aufgabe wird durch eine magnetische Halterung der Lastverteilscheiben in Montageposition gelöst.

Ein für die Lösung der Aufgabe ausgelegtes Setzgerät kann eine Anordnung aus einem Befestiger und einer ferromagnetischen Lastverteilscheibe durch Isolationsschichten hindurch auf einer Unterkonstruktion befestigen. Dazu umfasst die grundsätzliche Anordnung einen verfahrbaren Rahmen mit einer ersten Zuführvorrichtung für Lastverteilscheiben und einer zweiten Zuführvorrichtung für Befestiger. Solche Setzgeräte werden auf grossen, ebenen Dachflächen bewegt, daher haben sich Kombinationen aus einer einzelnen Radachse und Stützen bewährt, die das Setzgerät beim Arbeitsvorgang sicher an Ort und Stelle positionieren.

Aus dem Stand der Technik bekannt ist die Durchführung des Setzvorgangs mittels eines manuellen Betätigungselements mit einer vertikal angeordneten, gegen eine Feder teleskopierbaren Druckstange. Am Betätigungselement ist eine Antriebseinheit mit einem motorisch angetriebenen Antriebsdorn angebracht, der einen Befestiger während des Setzvorgangs antreiben kann. Üblicherweise ist die Antriebseinheit eine Art Bohrmaschine, häufig mit Ackus betrieben, um den Nachzug eines Stromkabels zu vermeiden. Der Antriebsdorn weist an seinem offenen Ende üblicherweise einen Kraftangriff in Form einer Klinge auf, die in den Kopf des Befestigers passend eingreifen kann. Die Längsachse des Antriebsdorns definiert eine Arbeitsachse; diese steht üblicherweise auf der Unterlage (Dachoberfläche) senkrecht, wenn das Setzgerät in Arbeitsposition ist.

Wie oben erwähnt, dient die Anordnung aus Lastverteilscheibe und Befestiger üblicherweise zur Fixierung von Isolationsschichten auf Industriedächern. Durch die Vielzahl von immer gleichen Befestigungsvorgängen bei gefordert hoher Setzqualität ist ein schlanker Arbeitsvorgang wichtig. Dazu dienen im vorgestellten Setzgerät eine Montagehalterung für eine Lastverteilscheibe sowie eine Montageführung für einen Befestiger, beides bezeichnet jeweils eine Bereitschafts-Position im Setzgerät für den Setzvorgang.

Eine zum Setzen geeignete Lastverteilscheibe weist üblicherweise eine im Wesentlichen flache, in einer Hauptebene ausgedehnte scheibenförmige Kontur sowie eine zentralsymmetrisch angeordnete Durchgangsöffnung auf. Dabei ist mit "in einer Hauptebene scheibenförmig" nicht ausschliesslich ein rein flaches, ebenes Design gemeint. Mit Hauptebene ist die Ebene gemeint, in der sich eine Lastverteilscheibe flächig hauptsächlich erstreckt. Lastverteilscheiben der beschriebenen Art haben eine rotationssymmetrische Grundform, was der Verwendung mit dem hier beschriebenen Setzgerät entgegenkommt.

Lastverteilscheiben für den hier beschriebenen Zweck können Sicken aufweisen zur Versteifung, punktförmige Noppen oder Krallen, um den Halt einer Lastverteilscheibe auf den Isolationsschichten zu verbessern. Aus praktischen Gründen werden die Lastverteilscheiben häufig so gestaltet, dass sie gut stapelbar sind. Häufig werden sie aus verzinktem Stahlblech durch Stanzen und Prägen gefertigt. Will man Stanzabfälle vermeiden, bieten sich eher quadratische oder vieleckige Grundformen an.

Die erste Zuführvorrichtung (für Lastverteilscheiben) ist so ausgelegt, dass jede Lastverteilscheibe einzeln aus einem Magazin (Scheibenvorrat) oder aus einer Einzelzuführung in die Montagehalterung gefördert werden kann. Die zweite Zuführvorrichtung (für Befestiger) kann mit einem Zuführschacht für einzeln einzulegende Befestiger oder mit einem Vereinzelungsgerät für Befestiger aus einem Magazinstreifen ausgerüstet sein. Diese Zuführvorrichtung fördert die Befestiger einzeln in die Montageführung. Die Montageführung wiederum sorgt dafür, dass der einzelne bzw. vereinzelte Befestiger entlang der Arbeitsachse ausgerichtet und positioniert wird.

Die Montagehalterung ist dafür ausgelegt, eine Lastverteilscheibe in Montageposition an einer Anlagefläche so anzuordnen, dass die Arbeitsachse durch die Durchgangsöffnung der Lastverteilscheibe zielt. Lastverteilscheibe und Befestiger sind also aufeinander ausgerichtet. Die Hauptebene der Lastverteilscheibe (in Montageposition) verläuft dabei planparallel zur Anlagefläche oder fällt mit ihr zusammen. Mit Anlagefläche sei damit nicht zwingend gemeint, der Oberseite der Lastverteilscheibe eine grösstmögliche Auflage in der Montagehalterung zu bieten. Es kann sich beispielsweise auch um eine ringförmige Anlagefläche handeln, die symmetrisch um die Arbeitsachse angelegt ist. Auch Punktauflagen sind denkbar, je nach Art, Dimension und Gewicht der Lastverteilscheibe.

Es hat sich gezeigt, dass je nach Auslegung der Montagehalterung und der Art der Lastverteilscheiben auf mechanische Längs- und seitliche Anschläge in der Montagehalterung verzichtet werden kann, was fallweise die Handhabung erleichtern kann, weil ein Verklemmen oder ein Verkanten weitgehend vermieden werden können.

Dies wird insbesondere dadurch erzielt, dass in der Montagehalterung ein Magnetsystem angeordnet wird, dessen Stärke so ausgelegt ist, dass eine zu setzende Lastverteilscheibe hängend in der Montagehalterung ohne zusätzliche mechanische Haltemittel fixiert werden kann. Dabei wird das Magnetsystem so ausgelegt, dass die Lastverteilscheibe einerseits in der Montageposition sicher gehalten wird, aber dennoch rechtzeitig während des Setzvorgangs freigibt. "Ohne zusätzliche mechanische Haltemittel" ist dabei so zu verstehen, dass ohne das Magnetsystem eine Lastverteilscheibe aus der Montagehalterung herausfallen würde.

Das Magnetfeld kann statisch durch eine Anordnung von Permanentmagneten erzeugt werden, aber auch durch eine (oder mehrere) Magnetspule(n). Magnete, insbesondere Permanentmagnete sind in den verschiedensten Grössen, Formen und Feldstärken kommerziell erhältlich. Der Fachmann kann durch einfaches Ausprobieren herausfinden, wie die oben genannte Halte- bzw. Lösebedingung erfüllt werden kann. Dabei wird er das Gewicht der Lastverteilscheibe ebenso berücksichtigen, wie die Möglichkeiten, die Magnete innerhalb der Montagehalterung anzuordnen. Durch einen modularen Aufbau kann u.U. die Montagehalterung im Setzgerät austauschbar gestaltet werden, womit auch die Verwendung speziell zugeschnittener Magnetsystem je nach Typ von Lastverteilscheibe möglich wird.

So kann das Magnetsystem aus einem ringförmigen Permanentmagneten, einer Ringspule oder einer Mehrzahl von Stabmagneten bestehen, die symmetrisch um die Arbeitsachse in der Montagehalterung angeordnet sind. Insbesondere eine symmetrische Anordnung um den Endbereich der Montageführung für den Befestiger, in einer Ebene nahe bzw. parallel zur der Anlagefläche, ist bevorzugt. Ein um die Arbeitsachse rotationssymmetrisches Magnetfeld wird einen evtl. ebenfalls ferromagnetischen Befestiger praktisch nicht beeinflussen, weil er sich auf der Arbeitsachse dort befindet, wo das Magnetfeld keine resultierende Kraft auf ihn ausübt.

Wie später noch erläutert, unterstützt das symmetrische Magnetfeld eine Zentrierung der Lastverteilscheibe in der Montageposition. Dabei können ergänzend auch mechanische Zentrierelemente vorgesehen werden, wie beispielsweise Konturelemente in der Montagehalterung, die einen Formschluss mit entsprechend konturierten Bereichen der Lastverteilscheibe eingehen. Weitergehend kann in der Montagehalterung ein mechanischer Anschlag (Endanschlag) vorgesehen werden, der die Bewegung einer Lastverteilscheibe entlang der Verschubbahn in der Montagehalterung begrenzt.

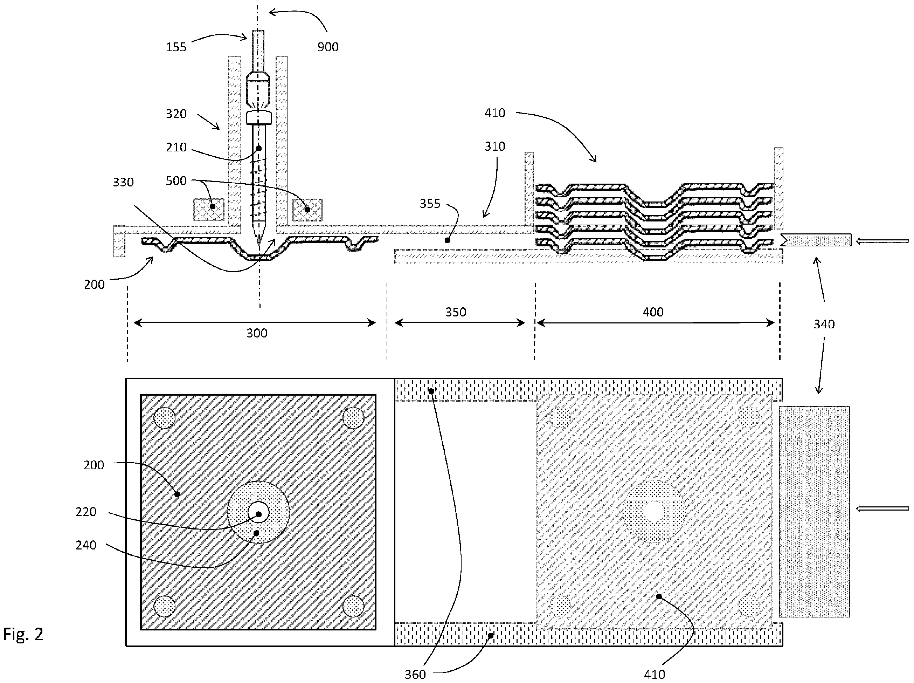

Die Montagehalterung bildet einen Teil der Bodengruppe des Setzgeräts, zu der auch das Fahrgestell und andere Komponenten gehören. Sie wird insbesondere mit Verweis auf Figur 2 nochmals erläutert. Die Magnete können in der Bodengruppe in entsprechend gestaltete Ausfräsungen eingelegt werden. Ein üblicher Werkstoff für solche Setzgeräte ist Aluminium, in das entsprechende Öffnungen eingearbeitet werden können. Eine weitere Möglichkeit wäre, ein Magnetsystem auswechselbar in oder an der Bodengruppe anzuordnen und so beispielsweise unterschiedlich starke Magnete für unterschiedlich schwere Lastverteilscheiben vorzusehen.

Für den Fachmann ergibt sich die Festlegung der Magnetformen, Magnetstärken, Polausrichtung und deren Anordnung am besten durch Ausprobieren mit einem entsprechenden Setzgerät. Im vorliegenden Setzgerät wurden erfolgreich permanente Stabmagnete oder Ringmagnete eingesetzt. So lassen sich Anordnungen aus zwei bzw. drei Stabmagneten realisieren. Bei zwei Stabmagneten gleicher Feldstärke in symmetrischer Anordnung um die Montageführung für den Befestiger zeigte sich, dass die Ausrichtung der Pole für die Funktion keine Rolle spielt. Werden drei Stabmagneten entlang der Seiten eines gleichseitigen Dreiecks angeordnet, empfiehlt sich die Ausrichtung jeweils von Südpol des einen auf den Nordpol des nächsten Magneten.

Ebenfalls können kurze Stabmagnete, beispielsweise in Zylinderform, verwendet werden, deren Magnetfelder parallel bevorzugt zur Arbeitsachse angeordnet werden. Die Polarität der Einzelmagnete muss so ausgerichtet werden, dass die Bedingungen zur Symmetrie des Magnetfelds erfüllt wird, was durch Versuche ermittelt werden kann.

Permanentmagnete werden heute im industriellen Massstab gefertigt, indem eine Neodym-Eisen-Bor Legierung als Pulver in Form gepresst und dann je nach Einsatzzweck aufmagnetisiert wird. Auf diese Weise lassen sich sehr unterschiedliche Formen und Polarisierungsrichtungen erreichen.

Neben der um die Arbeitsachse symmetrischen Ausführung des Magnetfeldes hat sich gezeigt, dass eine ergänzende Asymmetrie-Komponente nützlich sein kann. Diese erzeugt in der Montagehalterung eine statische Magnetfeldkomponente, die eine resultierende Kraftwirkung auf eine Verteilscheibe in Montageposition ausübt. Die Asymmetrie wird so gewählt, dass eine Vektorkomponente dieser Kraftwirkung von der Montageposition weg in Verlängerung der Verschubbahn zeigt. Der Grund für diese Auslegung ist, dass so beim Einführen einer Lastverteilscheibe in die Montagehalterung immer eine Magnetfeld-Komponente die Lastverteilscheibe in Transportrichtung "zieht". Zwar hat auch das symmetrische Magnetsystem diese grundsätzliche Wirkung, bis der zentrierte Sitz der Lastverteilscheibe erreicht ist. Eine ergänzende, nicht verschwindende Komponente kann aber je nach Art, Grösse und Gewicht der Lastverteilscheibe von Vorteil sein.

Die Asymmetrie kann grundsätzlich auf zwei Weisen bewirkt werden: Ein wie oben beschriebenes Magnetsystem kann durch einen zusätzlich angeordneten bzw. ergänzenden Magneten entsprechend eine resultierende Asymmetrie erhalten. Alternativ bzw. äquivalent kann die Asymmetrie-Komponente auch durch eine grundsätzlich asymmetrische Anordnung der das Magnetsystem bildenden Magnete erzielt werden.

Ein Verfahren zum Setzen einer Lastverteilscheibe mittels eines Befestigers durch ein Setzgerät wie hier beschrieben erfolgt mit folgenden Schritten. Ein Fachmann wird erkennen, dass bestimmte Schritte (Bewegungsabläufe), die hier zwangsläufig logisch sequenziell beschrieben werden müssen, auch gleichzeitig oder zeitlich überlappend ablaufen können. Die Verfahrensschritte sind wie folgt:
- Bereitstellen eines Setzgeräts mit einem Lastverteilscheibenvorrat in einem Magazin und Bereitstellen mindestens eines Befestigers über eine zweite Zuführvorrichtung.
- Positionieren des Setzgerätes an einer Sollposition
- Der eigentliche Setzvorgang beginnt mit dem Herunterdrücken des Betätigungselements an den Handgriffen, wobei die Vertikalbewegung einer Druckstange übersetzt wird in:
   ▪ Einerseits eine Horizontalbewegung einer Vorschubklinge in einer Verschubbahn und
   ▪ Andererseits in eine Absenkbewegung des durch die Antriebseinheit drehangetriebenen Antriebsdorns entlang der Arbeitsachse und eine
   ▪ Zentrierung eines Befestigers in einer Montageführung auf der Arbeitsachse
- wobei durch die Horizontalbewegung der Vorschubklinge eine einzelne Lastverteilscheibe aus dem Magazin in einem Kanal auf einer horizontalen Verschubbahn in eine Montagehalterung verschoben wird.

Hierbei wird die Lastverteilscheibe aus einer mechanischen Führung in den Bauraum der Montagehalterung freigegeben, wo das Magnetfeld des Magnetsystems die Lastverteilscheibe in die Montageposition zieht und dort temporär fixiert. Die Ausführung des Magnetsystems als symmetrisch oder asymmetrisch spielt bei diesem grundsätzlichen Bewegungsablauf keine Rolle.

Die Lastverteilscheibe liegt dann an einer Anlagefläche, angezogen durch das Magnetsystem, definiert an. Dieses Magnetfeld erlaubt, die Lastverteilscheibe dort ohne weitere mechanische Klemmen und Halterungen um die Arbeitsachse zentriert zu halten, wobei die Arbeitsachse und die Durchgangsöffnung der Lastverteilscheibe fluchten.

Im weiteren Verlauf des Setzvorgangs kann der vom Antriebsdorn geführte und angetriebene Befestiger durch die Durchgangsöffnung treten. Durch die weitere Absenkbewegung schlägt der Kopf des Befestigers dann an der Durchgangsöffnung an und löst die Lastverteilscheibe entgegen der Magnetkraft von der Anlagefläche ab. Der Setzvorgang ist abgeschlossen, wenn der Befestiger in der Unterkonstruktion verankert ist und die Lastverteilscheibe gemäss Vorgabe in die Arbeitsfläche eingebracht ist und dort beispielsweise eine Isolationsschicht sichert.

In einem weiteren Schritt wird durch vertikales Zurückführen des Betätigungselementes das Setzgerät in seine Start- und Ausgangslage zurückversetzt und ist dann bereit für den nächsten Setzvorgang. Das Zurückführen kann durch Federkraft unterstützt werden.

Der vorgängig beschriebene Setzvorgang kann alternativ so erfolgen, dass das Beladen der Montagehalterung mit einer Lastverteilscheibe nicht vor dem Setzvorgang durch das Herunterdrücken des Betätigungselementes erfolgt, sondern nach dem Setzvorgang durch das vertikale Zurückführen. Dieser Bewegungsablauf hat den Vorteil, dass das federunterstütze Zurückführen den Beladevorgang der Montagehalterung unterstützt und somit beim eigentlichen Setzvorgang eine Lastverteilscheibe bereits zentriert in der Montagehalterung vorliegt.

Bei der ersten Verfahrensvariante ist der Bereitstellungsvorgang für den Befestiger und die Lastverteilscheibe somit ein Teil des Setzvorgang und in einem Zug durchführbar.

Bei der zweiten Variante ist nachteilig, dass vor dem ersten eigentlichen Setzvorgang eine Lastverteilscheibe in die Montagehalterung gefördert werden muss, was in der Regel durch einen "leeren" Setzvorgang ohne eingelegten Befestiger geschieht. Zudem wird nach dem letzten Setzvorgang unter Umständen eine Lastverteilscheibe in der Montagehalterung verbleiben und muss dann manuell entfernt werden. Dennoch können beide Varianten bei entsprechendem Einsatzszenarien sinnvoll sein.

### BESCHREIBUNG DER FIGUREN

Figur 1 zeigt eine Seitenansicht auf ein Setzgerät gemäss vorliegender Beschreibung.
Figur 2 zeigt Details einer Montagehalterung eines solchen Setzgeräts.
Figur 3a zeigt eine geladene Montagehalterung mit einem symmetrischen Magnetsystem.
Figur 3b zeigt eine geladene Montagehalterung mit einem asymmetrischen Magnetsystem.
Figur 4 zeigt eine Lastverteilscheibe im Schnitt.
Figur 5 zeigt eine Auswahl möglicher Anordnungen von Magneten als Magnetsystem in einer Montagehalterung eines Setzgeräts gemäss vorliegender Beschreibung.
Figur 6 zeigt exemplarisch den Dachaufbau eines Industriedaches mit einem Trapezblech als Unterkonstruktion und einer aufgelegten Isolationsschicht.
Figur 7 zeigt exemplarisch die relative Lage von Lastverteilscheibe und Befestiger zueinander vor dem Einsetzprozess.
Figuren 8A bis C zeigen Magnetsysteme, ergänzt um eine Asymmetrie-Komponente.

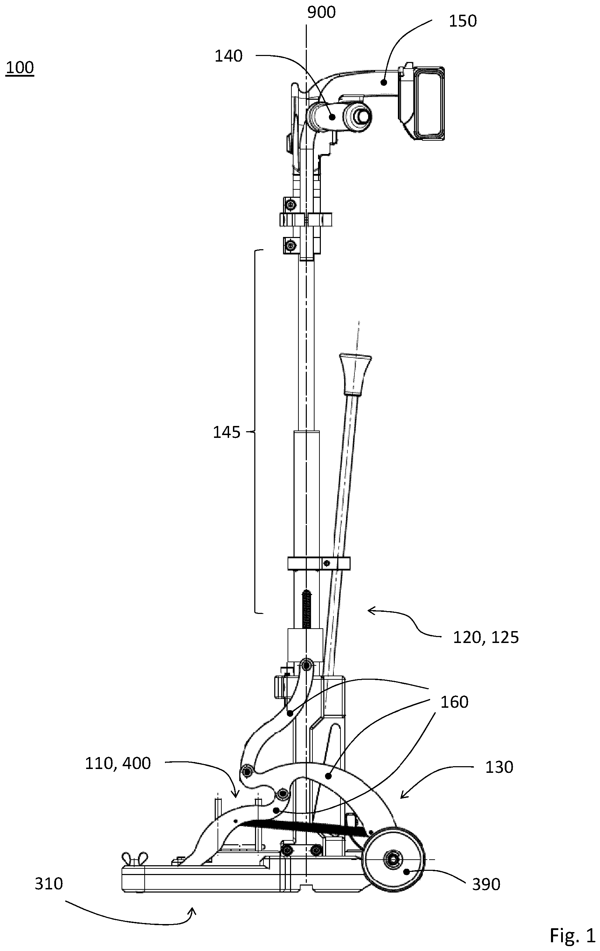

Figur 1 dient dazu, einen Überblick über den Aufbau eines Setzgeräts der hier beschriebenen Art zu geben. Die Beschreibung erfolgt von unten nach oben in Bezug auf ein stehendes Gerät.

Das gezeigte Setzgerät 100 umfasst eine Bodengruppe 310, die die Montagehalterung 300 (nicht sichtbar) und das Magazin 400 aufnimmt. Das Magazin 400 stellt hierbei den sichtbaren Teil der ersten Zuführvorrichtung 110 für Lastverteilscheiben dar. Am hinteren Ende der Bodengruppe 310, der Position des Bedieners zugewandt, befindet sich die Radachse 390. Bodengruppe 310 und Radachse 390 bilden zusammen einen verfahrbaren Rahmen 130. Der Setzvorgang an sich wird im Wesentlichen durch das manuelle Herunterdrücken des Betätigungselement 140 bewirkt, hier in der Figur durch zwei Handgriffe (einer dargestellt) symbolisiert. Durch die Abwärtsbewegung fährt die Druckstange 145 entlang der Arbeitsachse 900 nach unten, diese Abwärtsbewegung überträgt sich über die Hebeleinheit 160 sowohl auf die erste wie auch die zweite Zuführvorrichtung 110, 120. Die zweite Zuführvorrichtung ist anhand des Zuführschachts 125 für einzelne Befestiger erkennbar. Im Bereich der Handgriffe ist eine Antriebseinheit 150 gezeigt, die auf den Antriebsdorn 155 (nicht sichtbar) wirkt.

Figur 2 hebt die wesentlichen Bestandteile der Montagehalterung 300 für Lastverteilscheiben 200, des Magazins 400 sowie der Montageführung 320 für Befestiger 210 hervor, die zusammen in der Bodengruppe 310 angeordnet sind bzw. Bestandteil von ihr bilden. In Figur 2 ist das Magazin 400 rechts angeordnet, es nimmt einen Vorrat 410 an gestapelten Lastverteilscheiben auf. Eine Lastverteilscheibe 200, die aus dem Magazin 410 in firm Montagehalterung 300 verbracht werden soll, muss dazu entlang einer Verschubbahn 350 in einem Kanal 355 horizontal verschoben werden, bis die Lastverteilscheibe 200 an der Anlagefläche 330 ausgerichtet ist und dort vom Magnetsystem 500 gehalten wird. Dieser horizontale Verschub wird mit Hilfe einer Vorschubklinge 340 bewirkt, die durch die Hebeleinheit 160 betätigt wird. Die Bewegungsrichtung der Klinge 340 ist mit einem Pfeil gezeigt. In der Montagehalterung 300 wird die Lastverteilscheibe 200 an der Anlagefläche 330 magnetisch gehalten. Sie ist hier zentriert um die Achse 900 gezeigt, entlang der auch ein Befestiger 210 und der im Eingriff mit dem Befestiger gezeigte Antriebsdorn 155 aufgezeigt sind. Aus der Figur 2 wird klar, dass die Abwärtsbewegung des Antriebsdorns 155 den Befestiger 210 durch die Mittenöffnung 220 in der Lastverteilscheibe führen wird. Der Kopf des Befestigers 210 wird dann am Kragen der Mittenöffnung 220 bzw. an der Vertiefung 240 anschlagen, was unmittelbar darauf zum Ablösen der Lastverteilscheibe aus der magnetischen Halterung in der Montagehalterung 300 führt.

Die untere Bildhälfte von Figur 2 zeigt die Situation in Draufsicht. Die Verschubbahn kann als Kanal mit nur schmalen Seitenführungen bzw. seitlichen Auflagern 360 realisiert werden. Die Vorschubklinge 340 ist nur schematisiert dargestellt. Ein vorteilhaftes Merkmal der magnetischen Halterung liegt darin, dass in der Montagehalterung 300 keine mechanischen Elemente die Freigabe der Lastverteilscheibe 200 beim Setzvorgang behindern können. Das Risiko eines Verklemmens ist daher wesentlich verringert.

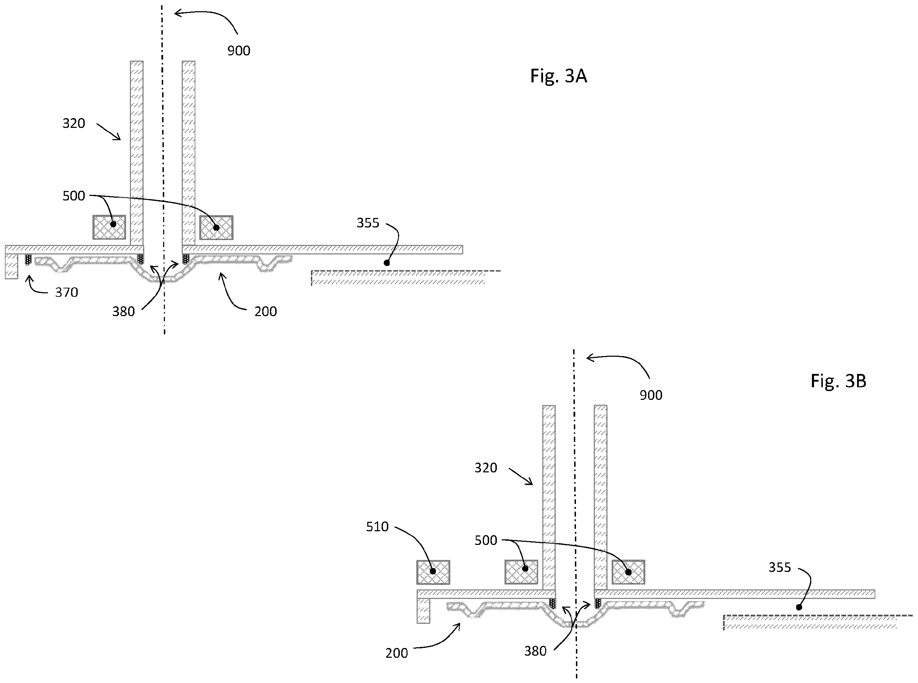

Die Figuren 3a und 3b sind Ausschnitte aus Figur 2 mit geringfügigen Änderungen im Bereich der Montagehalterung 300. Teile, die bereits im Zusammenhang mit Figur 2 erläutert wurden, sind daher hier nicht nochmals aufgeführt.

In Figur 3A sind der Befestiger und der Antriebsdorn weggelassen worden. Es geht hier um optionale Zentrier- und Anschlagmittel (370, 380), die in der Montagehalterung verbaut werden können, um die Platzierung bzw. Zentrierung einer Lastverteilscheibe 200 zu gewährleisten. Wie erkennbar, unterstützen Zentriermittel 380, die formschlüssig oder punktuell in die Vertiefung 240 eingreifen die korrekte Anlage der Lastverteilscheibe, ohne den späteren Eingriff eines Befestigers zu behindern. Ähnlich kann ein als Längsanschlag dienendes Anschlagmittel 370 hilfreich sein. Der Fachmann wird solche Mittel je nach Situation und technischem Bedarf einsetzen. Wichtig hierbei ist, dass die Anschlag- und Zentriermittel (370, 380) keine mechanische Haltemittel darstellen oder den Halteprozess unterstützen.

In Figur 3B finden sich die aus Figur 3A bekannten und dort erläuterten Zentriermittel. Neu gezeigt ist, exemplarisch, die Asymmetrie-Komponente, die das symmetrische Magnetsystem 500 ergänzen kann. Hier ist ein ergänzender Magnet so verbaut, dass er die Verschubbewegung aus dem Magazin 400 in die Montagehalterung 300 speziell in der Endphase unterstützen kann.

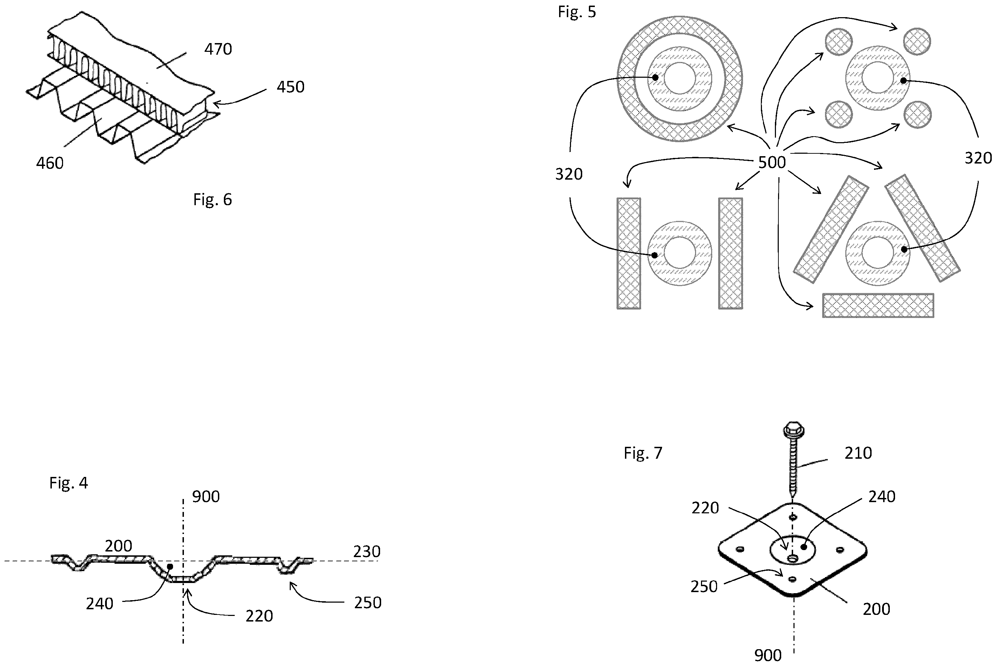

Figur 4 zeigt eine Lastverteilscheibe 200 im Diagonalschnitt mit ihrer zentralen Durchgangsöffnung 220 und ihrer Hauptebene 230. Die Figur 7 zeigt dieselbe Scheibe in schräger Draufsicht zusammen mit einem entlang der Arbeitsachse 900 angeordneten, beabstandeten Befestiger 210. Die durch die Durchgangsöffnung 220 verlaufende Arbeitsachse 900 ist in beiden Figuren gezeigt. Die (Halte-)Nocken 250 unterstützen die Haltewirkung der Lastverteilscheibe 200 nach deren Montage und bilden auch einen Verdrehschutz. In Figur 7 wird deutlich, dass der Kopf des Befestigers 210 nach der Montage in einer Vertiefung 240 in der Lastverteilscheibe 200 liegen kann und somit die Oberfläche der Lastverteilscheibe 200 nicht überragt.

Figur 6 zeigt einen Anwendungsfall für das hier beschriebene Setzgerät, nämlich die Befestigung einer Dachmembran 470 via eine Isolationsschicht 450 auf einer Unterkonstruktion (Trapezblech) 460. Es gibt auch Isolationsmaterialien, die formschlüssig in die Trapezform eingreifen können.

Figur 5 zeigt verschiedene Anordnungen von Magneten, die gemeinsam ein (symmetrisches) Magnetsystem 500 gemäss vorliegender Beschreibung bilden. Die Darstellung entspricht einem Blick entlang der Arbeitsachse (senkrecht zur Zeichenebene, nicht dargestellt). Im Uhrzeigersinn von links oben beginnend: (1) Ein einzelner ringförmiger Magnet, symmetrisch um die Arbeitsachse angeordnet. (2) Einzelne zylindrische Magnete wiederum kreisförmig um die Arbeitsachse angeordnet. Die Polarität ist bevorzugt ebenfalls symmetrisch verteilt. (3) In einem gleichseitigen Dreieck angeordnete Stabmagnete. Wegen der ungeraden Anzahl Magnete empfiehlt sich eine Anordnung, bei der je ein südpoliges Ende eines Magneten dem Nordpol des nächsten Magneten gegenüberliegt. (4) Bei der Anordnung von 2 Stabmagneten hat sich herausgestellt, dass die Polausrichtung für die Funktion keine Rolle spielt.

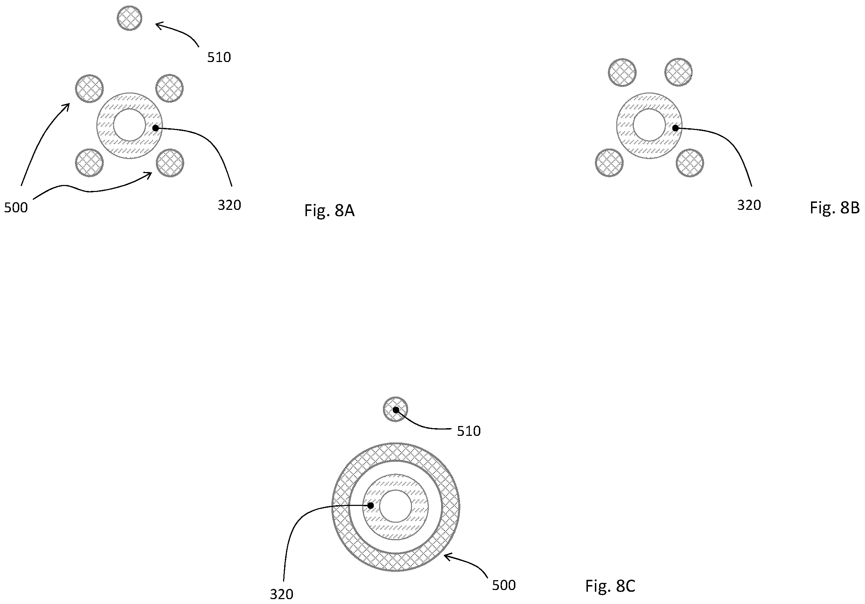

Die Figuren 8A und 8C zeigen Anordnungen symmetrischer Magnetsysteme 500 um eine Montageführung 320 plus eine vereinzelte, ergänzende Asymmetriekomponente 510. Äquivalent lässt sich die Anordnung aus Figur 8A zu einer asymmetrischen Konfiguration entwickeln, siehe Figur 8B.

## Patentansprüche

1. Setzgerät (100) zum Setzen einer Anordnung aus einem Befestiger (210) und einer ferromagnetischen Lastverteilscheibe (200), die zur Montage von Dachmembranen (470) und Isolationsschichten (450) auf einer Unterkonstruktion (460) dient, umfassend einen verfahrbaren Rahmen (130) mit
- einer ersten Zuführvorrichtung (110) für Lastverteilscheiben
- einer zweiten Zuführvorrichtung (120) für Befestiger
- einem manuellen Betätigungselement (140) für den Setzvorgang mit einer vertikal angeordneten, gegen eine Feder teleskopierbaren Druckstange (145);
- eine am Betätigungselement angebrachten Antriebseinheit (150) mit einem motorisch angetriebenen Antriebsdorn (155) zum Antreiben eines Befestigers während des Setzvorgangs, wobei die Längsachse dieses Antriebsdorns (155) eine Arbeitsachse (900) definiert
- einer Montagehalterung (300) für eine Lastverteilscheibe in Montageposition
- einer Montageführung (320) für einen Befestiger in Montageposition wobei
- eine zum Setzen geeignete Lastverteilscheibe (200) eine im Wesentlichen flache, in einer Hauptebene ausgedehnte scheibenförmige Kontur sowie eine zentralsymmetrisch angeordnete Durchgangsöffnung (220) aufweist
- die erste Zuführvorrichtung (110) so ausgelegt ist, dass eine Lastverteilscheibe (200) entlang einer Verschubbahn (350) einzeln aus einem Magazin (400) oder aus einer Einzelzuführung in die Montagehalterung (300) gefördert werden kann;
- die zweite Zuführvorrichtung (120) einen Befestiger (210) aus einem Zuführschacht (125) oder einem Magazinstreifen einzeln in die Montageführung (320) fördern kann;
- die Montageführung (320) ausgelegt ist, einen einzelnen Befestiger entlang der Arbeitsachse (900) auszurichten und zu positionieren;
- in Montageposition eine Lastverteilscheibe (200) in der Montagehalterung (300) an einer Anlagefläche (330) so angeordnet ist, dass die Arbeitsachse (900) durch die Durchgangsöffnung (220) der Lastverteilscheibe (200) zielt,
**dadurch gekennzeichnet, dass**
in der Montagehalterung (300) ein Magnetsystem (500) angeordnet ist, welches in der Montagehalterung (300) ein Magnetfeld erzeugt, dessen Stärke so ausgelegt ist, dass eine zu setzende Lastverteilscheibe (200) hängend in der Montagehalterung (300) ohne zusätzliche mechanische Haltemittel fixiert werden kann.

2. Setzgerät nach Anspruch 1, **dadurch gekennzeichnet, dass** das Magnetsystem (500) in einer Ebene parallel zur Anlagefläche (330) beabstandet angeordnet ist.

3. Setzgerät nach Anspruch 1-2, **dadurch gekennzeichnet, dass** das Magnetsystem (500) ein oder mehrere Magnete umfasst, die so um die Arbeitsachse (900) in der Montagehalterung (300) angeordnet sind, dass ein um die Arbeitsachse (900) rotationssymmetrisches Magnetfeld gebildet wird.

4. Setzgerät nach Anspruch 1-3, **dadurch gekennzeichnet, dass** das Magnetsystem (500) aufgebaut ist aus:
- einem ringförmigen Permanentmagneten oder einer Ringspule bzw.
- zwei parallel angeordneten Stabmagneten bzw.
- drei Stabmagneten, die entlang der Seiten eines gleichseitigen Dreiecks angeordnet sind bzw.
- aus einer Mehrzahl von kurzen Stabmagneten, deren Magnetfeld parallel zur Arbeitsachse (900) ausgerichtet ist.

5. Setzgerät nach Anspruch 1-4, **dadurch gekennzeichnet, dass** das Magnetsystem (500) ergänzend eine Asymmetrie-Komponente (510) aufweist, welche in der Montagehalterung (300) eine statische Magnetfeldkomponente erzeugt, die eine resultierende Kraftwirkung auf eine Verteilscheibe (200) in Montageposition ausübt, wobei eine Vektorkomponente (520) dieser Kraftwirkung von der Montageposition weg in Verlängerung der Verschubbahn (350) zeigt.

6. Setzgerät nach Anspruch 5, **dadurch gekennzeichnet, dass** die Asymmetrie-Komponente (510) durch einen das Magnetsystem (500) ergänzenden Magneten bewirkt wird.

7. Setzgerät nach Anspruch 5, **dadurch gekennzeichnet, dass** die Asymmetrie-Komponente (510) durch eine asymmetrische Anordnung der das Magnetsystem (500) bildenden Magnete bewirkt wird.

8. Setzgerät nach Anspruch 1-7, **dadurch gekennzeichnet, dass** in der Montagehalterung (300) ein mechanisches Zentriermittel (380) vorgesehen ist, welches die Lastverteilscheibe (200) in der Montageposition symmetrisch zur Arbeitsachse (900) zentriert.

9. Setzgerät nach Anspruch 1-8, **dadurch gekennzeichnet, dass** in der Montagehalterung (300) ein mechanischer Anschlag (370) vorgesehen ist, der die Bewegung einer Lastverteilscheibe (200) entlang der Verschubbahn (350) in der Montagehalterung (300) begrenzt.

10. Verfahren zum Setzen einer Lastverteilscheibe (200) mittels eines Befestigers (210) durch ein Setzgerät gemäss Anspruch 1-9 mit folgenden Schritten:
- Bereitstellen eines Setzgeräts (100) mit einem Lastverteilscheibenvorrat (410) in einem Magazin (400)
- Bereitstellen mindestens eines Befestigers (210) über eine zweite Zuführvorrichtung (120)
- Positionieren des Setzgerätes (100) an einer Sollposition
- Herunterdrücken des Betätigungselements (140), wobei die Vertikalbewegung einer Druckstange (145)
- Einerseits in eine Horizontalbewegung einer Vorschubklinge (340) und
- Andererseits in eine Absenkbewegung des durch die Antriebseinheit (150) drehangetriebenen Antriebsdorn (155) entlang der Arbeitsachse (900) überführt und
- ein Befestiger (210) in einer Montageführung (320) auf der Arbeitsachse (900) zentriert wird
- wobei durch die Horizontalbewegung der Vorschubklinge (340) eine einzelne Lastverteilscheibe (200) aus dem Magazin (400) in einem Kanal (355) auf einer horizontalen Verschubbahn (350) in eine Montagehalterung (300) verschoben wird und
- dort an einer Anlagefläche (330) durch ein Magnetsystem (500) gehalten wird, und
- die Lastverteilscheibe (200) dort ohne weitere mechanische Haltemittel um die Arbeitsachse (900) so zentriert gehalten wird, dass die Arbeitsachse (900) und die Durchgangsöffnung (220) der Lastverteilscheibe (200) fluchten
- wonach der vom Antriebsdorn (155) geführte und angetriebene Befestiger (210) die Durchgangsöffnung (220) durchtreten kann und
- durch die Absenkbewegung der Kopf des Befestigers (210) in die Durchgangsöffnung (220) eingreift und
- die Lastverteilscheibe (200) entgegen der Magnetkraft von der Anlagefläche (330) ablöst und
- der Befestiger (210) mit der Lastverteilscheibe (200) in eine Arbeitsfläche eingebracht wird bis der Setzvorgang abgeschlossen ist und
- das Betätigungselementes (140) vertikal nach oben zurückgeführt wird.

11. Verfahren zum Setzen einer Lastverteilscheibe (200) mittels eines Befestigers (210) durch ein Setzgerät gemäss Anspruch 1-9 mit folgenden Schritten:
- Bereitstellen eines Setzgeräts (100) mit einem Lastverteilscheibenvorrat (410) in einem Magazin (400) und einer einzelnen Lastverteilscheibe in Montageposition in einer Montagehalterung (300)
- Bereitstellen mindestens eines Befestigers (210) über eine zweite Zuführvorrichtung (120)
- Positionieren des Setzgerätes (100) an einer Sollposition
- Herunterdrücken des Betätigungselements (140), wobei die Vertikalbewegung einer Druckstange (145)
- in eine Absenkbewegung des durch die Antriebseinheit (150) drehangetriebenen Antriebsdorn (155) entlang der Arbeitsachse (900) überführt und
- ein Befestiger (210) in einer Montageführung (320) auf der Arbeitsachse (900) zentriert wird
- wonach der vom Antriebsdorn (155) geführte und angetriebene Befestiger (210) die Durchgangsöffnung (220) durchtreten kann und
- durch die Absenkbewegung der Kopf des Befestigers (210) in die Durchgangsöffnung (220) eingreift und
- die Lastverteilscheibe (200) entgegen der Magnetkraft von der Anlagefläche (330) ablöst und
- der Befestiger (210) mit der Lastverteilscheibe (200) in eine Arbeitsfläche eingebracht wird bis der Setzvorgang abgeschlossen ist, wonach
- durch Zurückführen des Betätigungselementes (140) vertikal nach oben
- eine Horizontalbewegung einer Vorschubklinge (340) bewirkt wird und
- eine einzelne Lastverteilscheibe (200) aus dem Magazin (400) in einem Kanal (355) auf einer horizontalen Verschubbahn (350) in eine Montagehalterung (300) verschoben wird und
- dort an einer Anlagefläche (330) durch ein Magnetsystem (500) gehalten wird, und
- die Lastverteilscheibe dort ohne weitere mechanische Haltemittel um die Arbeitsachse (900) so zentriert gehalten wird, dass die Arbeitsachse (900) und die Durchgangsöffnung (220) der Lastverteilscheibe (200) fluchten
